(19) Europäisches Patentamt
European Patent Office
Office européen des brevets

(11) **EP 1 155 507 B1**

(12) **EUROPÄISCHE PATENTSCHRIFT**

(45) Veröffentlichungstag und Bekanntmachung des Hinweises auf die Patenterteilung:
**28.08.2002 Patentblatt 2002/35**

(21) Anmeldenummer: **00906175.5**

(22) Anmeldetag: **01.02.2000**

(51) Int Cl.⁷: **H04B 1/58**, H04L 5/14

(86) Internationale Anmeldenummer:
**PCT/DE00/00277**

(87) Internationale Veröffentlichungsnummer:
**WO 00/051258 (31.08.2000 Gazette 2000/35)**

(54) **SCHALTUNG ZUR GEMEINSAMEN ÜBERTRAGUNG VON SPRACHE UND DATEN ÜBER EINE TELEFONLEITUNG**

CIRCUIT FOR JOINTLY TRANSMITTING VOICE AND DATA OVER A TELEPHONE LINE

CIRCUIT POUR TRANSMETTRE CONJOINTEMENT DES SIGNAUX VOCAUX ET DES DONNEES SUR UNE LIGNE TELEPHONIQUE

(84) Benannte Vertragsstaaten:
**DE FR GB**

(30) Priorität: **25.02.1999 DE 19908187**

(43) Veröffentlichungstag der Anmeldung:
**21.11.2001 Patentblatt 2001/47**

(73) Patentinhaber: **Infineon Technologies AG
81669 München (DE)**

(72) Erfinder: **ZOJER, Bernhard
A-9500 Villach (AT)**

(74) Vertreter: **Banzer, Hans-Jörg, Dipl.-Ing. et al
Kraus & Weisert
Patent- und Rechtsanwälte
Thomas-Wimmer-Ring 15
80539 München (DE)**

(56) Entgegenhaltungen:
**EP-A- 0 691 753       DE-C- 19 650 833
US-A- 5 841 841**

**Beschreibung**

Die vorliegende Erfindung betrifft eine Schaltung zur gemeinsamen Übertragung von Sprache und Daten über eine Telefonleitung. Insbesondere betrifft die vorliegende Erfindung eine Schaltung, die eine elektronische übertragerlose und relaislose Hardwarelösung zur gemeinsamen Übertragung von Sprache und breitbandigen Datensignalen nach xDSL-Standards ermöglicht.

Bei Systemen, bei denen sowohl Sprache als auch Daten über eine Telefonleitung übertragen werden, existieren auf der Telefonleitung gleichzeitig Sprach- und Datensignale in beiden Übertragungsrichtungen. Die Richtungstrennung erfolgt durch Subtraktion des gesendeten vom empfangenen Signal: Dazu muß die Impedanz der Telefonleitung nachgebildet werden. Die so erzielte Echodämpfung bestimmt wesentlich die erreichbare Datenrate.

EP 0 691753 offenbart eine Schaltung zum Auschluß von Daten übertrag angseinrichtungen an Telefonleitungen.

Typische breitbandige Datensysteme arbeiten mit Übertragern, während in analogen Sprachsystemen übertragerlose elektronische Lösungen üblich sind, die als Schnittstelle zur Telefonleitung sogenannte Teilnehmerschnittstellen- oder SLIC-Schaltungen (Subscriber Line Interface Circuits) verwenden. Diese basieren in der Regel auf dem Prinzip "Spannung senden, Strom empfangen" (U/I) oder "Strom senden, Spannung empfangen" (I/U). Über diese SLICs erfolgt auch die in analogen Systemen erforderliche DC-Speisung für den Teilnehmer, weswegen SLICs für hohe Spannungen (bis zu 150V) geeignet sein müssen. Um die beiden Systeme zu kombinieren, könnten vollständige herkömmliche Daten- und Sprachsysteme verwendet werden, wobei Übertrager und SLIC über eine Frequenzweiche (POTS-Splitter) mit der Telefonleitung verbunden werden. Die Echounterdrückung erfolgt dann getrennt für Sprach- und Datenfrequenzen vor dem Übertrager bzw. (in Richtung der Telefonleitung gesehen) vor der SLIC-Schaltung.

Ein übertragerloses System muß Sprache, Daten, DC-Speisung und eventuell Ring-Signale über eine breitbandige Hochvolt-SLIC-Schaltung übertragen. Für die Richtungstrennung durch Echounterdrückung können durch die SLIC-Schaltung hervorgerufene Signalverfälschungen im Sprachfrequenzbereich vernachlässigt werden. Bei einer hochfrequenten Datenübertragung müssen hingegen die durch Nichtlinearitäten der SLIC-Schaltung hervorgerufenen Signalverfälschungen berücksichtigt werden, da wegen der hohen Dämpfung der Telefonleitung sehr große Pegelunterschiede zwischen dem Sende- und dem Empfangssignal auftreten könne, so daß die SLIC-Verzerrungen, welche nicht kompensiert oder eliminiert worden sind, das Signal/Rauschverhältnis und die Datenrate negativ beeinlussen würden.

Der vorliegenden Erfindung liegt daher die Aufgabe zugrunde, eine übertragerlose Schaltung zur gemeinsamen Übertragung von Sprache und Daten über eine Telefonleitung bereitzustellen, wobei eine verbesserte Echodämpfung realisiert ist, so daß eine höhere Datenrate übertragen werden kann.

Diese Aufgabe wird durch eine Schaltung mit den Merkmalen des Anspruches 1 gelöst. Die Unteransprüche beschreiben bevorzugte und vorteilhafte Ausführungsformen der vorliegenden Erfindung, die ihrerseits insbesondere zu einer einfachen schaltungstechnischen Realisierung beitragen.

Die erfindungsgemäße Schaltung ist in Form einer direkt mit der entsprechenden Telefonleitung verbundenen SLIC-Schaltung ausgestaltet, wobei eine ausreichende Echodämpfung dadurch erzielt wird, daß ein der Summe von über die Telefonleitung fließenden und durch eine Sende- bzw. Empfangsleistung hervorgerufenen Sende- und Empfangsströmen entsprechender erster Strom sowie ein dem von der Sendeleistung bei der Datenfrequenz hervorgerufenen Strom entsprechender zweiter Strom erzeugt und die Differenz zwischen dem ersten Strom und dem zweiten Strom über einen datenbezogenen Anschluß der SLIC-Schaltung ausgegeben wird, wobei in dieser Differenz neben den von der Empfangsleistung hervorgerufenen Datenströmen allenfalls noch Gleich- und Sprachströme enthalten sind.

Der erste Strom kann durch eine erste Schaltung bestehend aus Treibern und Spannungs-/Stromverstärkern erzeugt werden, während der zweite Strom durch die Kombination von Hochpaßfiltern mit einem Verstärker erzeugt werden kann.

An den Datenausgang der SLIC-Schaltung kann sich ein weiteres Hochpaßfilter anschließen, welches dafür sorgt, daß in dem über den datenbezogenen Anschluß geführten Signal eventuell enthaltene Gleichstrom-oder Sprachströme herausgefiltert werden.

Die vorliegende Erfindung realisiert erstmals eine Echodämpfungsschleife für eine direkt an die Telefonleitung angeschlossene integrierte (Hochvolt-) SLIC-Schaltung, wobei die SLIC-Schaltung insbesondere gemäß dem U/I-Prinzip arbeitet.

Darüber hinaus ermöglicht die vorliegende Erfindung, daß in dem über die Datenleitung geführten Signal näherungsweise lediglich die von der Empfangsleistung hervorgerufenen Datenströme enthalten sind, wobei insbesondere in diesem Signal auch die von der SLIC-Schaltung hervorgerufenen nichtlinearen Verzerrungen unterdrückt sind.

Die vorliegende Erfindung wird nachfolgend ausführlicher anhand eines in der einzigen Figur dargestellten bevorzugten Ausführungsbeispiels erläutert.

Bei der in Fig. 1 gezeigten SLIC-Schaltung 1 handelt es sich um eine U/I-SLIC-Schaltung, die direkt über Telefonleitungsanschlüsse TIP und RING mit einer Telefonleitung 2 (ADSL-Leitung) verbunden ist, über welche Sprache und Daten gemeinsam übertragen werden.

In Fig. 1 ist mit ZL die Leitungsimpedanz der Telefonleitung 2 bezeichnet, während Vrx und Vtx Ersatzspannungsquellen symbolisieren, wobei Vrx auf der über einen entsprechenden Anschluß zugeführten Empfangsleistung und Vtx auf der Sendeleistung der SLIC-Schaltung 1 beruht. Die Telefonleitung 2 ist über Abschlußwiderstände R5 und R6 mit den Telefonleitungsanschlüsse TIP bzw. RING verbunden. Die Abschlußwiderstände R5 und R6 dienen der Leitungsanpassung. Bei den üblichen Datenfrequenzen beträgt die Leitungsimpedanz annähernd konstant 100 $\Omega$, so daß die Abschlußwiderstände R5 und R6 jeweils mit 50 $\Omega$ gewählt werden.

Die SLIC-Schaltung 1 umfaßt im wesentlichen zwei Schaltungsabschnitte.

Der erste Schaltungsabschnitt 1 enthält eine symmetrische Anordnung von Leitungstreibern T2, T4, Transkonduktanz- bzw. Spannungs-/Stromverstärkern T1, T3 und (vorzugsweise identischen) Widerständen R3, R4, welche gemäß Fig. 1 verschaltet sind. Die Leitungstreiber T2 und T4 empfangen die durch Vtx symbolisierte Sendeleistung und senden diese zusammen mit einem Gleichspannungsanteil, der durch VDC symbolisiert ist, niederohmig auf die Telefonleitung 2. Die Transkonduktanzverstärker T1 und T3 messen die durch die Widerstände R3 bzw. R4 fließenden Ströme, indem die an diesen Widerständen jeweils abfallende Spannung abgegriffen wird. Vorzugsweise skalieren die Transkonduktanzverstärker T1 und T3 den jeweiligen Meßwert um einen bestimmten Faktor, der beispielsweise 100 betragen kann, so daß sich für den Übertragungsfaktor $g_m$ der Verstärker T1 und T3 folgender Wert ergibt:

$$g_m = 1/(100*R3) = 1/(100*R4)$$

Die von den Transkonduktanzverstärkern T1 und T3 ausgegebenen Ströme werden phasenrichtig addiert und einem datenbezogenen bzw. den Daten zugewiesenen Stromausgang ITD der SLIC-Schaltung 1 zugeführt. Der somit gelieferte Summenstrom ist ein Maß für den transversalen Leitungsstrom, d.h. den über die Last fließenden Leitungsstrom, welcher sich aus der Überlagerung sämtlicher Ströme (Gleichstrom, Sprache und Daten) in Sende- und Empfangsrichtung zusammensetzt, d.h. es gilt bei Annahme der zuvor erwähnten Werte für R5 bzw. R6 und den Skalierungsfaktor der Transkonduktanzverstärker T1 und T3:

$$Ic = (Ia + Ib)/100 = [IDC + (Vtx+Vrx)/(100+ZL)]/50$$

Dabei bezeichnen Ia und Ib die über die Telefonleitung 2 bzw. die Telefonleitungsanschlüsse TIP und RING in Sende- und Empfangsrichtung fließenden Daten- und Sprachströme, Ic den (bei nicht Berücksichtigung der Funktion des in Fig. 1 gezeigten weiteren Verstärkers T5) von den beiden Transkonduktanzverstärker T1 und T3 ausgegebenen Summenstrom und IDC den dem Gleichspannungsanteil VDC entsprechenden Gleichstromanteil.

Der zweite wesentliche Schaltungsabschnitt umfaßt die in Fig. 1 gezeigten Kondensatoren C1, C2, Widerstände R1 und R2 sowie den weiteren Strom-/Spannungsverstärker T5. Die Bauelemente R1 und C1 sowie R2 und C2 bilden jeweils ein Hochpaßfilter, so daß die Eingänge des Verstärkers T5 jeweils über eines der Hochpaßfilter mit den Telefonleitungsanschlüssen TIP bzw. RING gekoppelt sind. Die zuvor genannten Hochpaßfilter sind derart dimensioniert, daß aufgrund der Hochpaßfilterung zwischen den in Fig. 1 gezeigten zusätzlichen Anschlüssen CTIP und CRING nurmehr die Datenstromanteile vorhanden sind, während zwischen den Anschlüssen TIP und RING sowohl Sprachals auch Datenstromanteile vorhanden sind. Der Verstärker T5 mißt die zwischen diesen Anschlüssen CTIP und CRING anliegende (datenbezogene) Spannung und erzeugt einen entsprechenden Ausgangsstrom Id.

Der oben beschriebene zweite Schaltungsabschnitt besitzt die Funktion, den von der Sendeleistung im Datenfrequenzbereich hervorgerufenen Strom von dem Summenstrom der beiden Transkonduktanzverstärker T1 und T2 wieder zu subtrahieren. Dieser durch Vtx hervorgerufene Strom muß somit dem in Fig. 1 gezeigten Ausgangsstrom Id in Größe und Richtung entsprechen.

Da, wie bereits zuvor erwähnt worden ist, die Leitungsimpedanz ZL der Telefonleitung 2 im Datenfrequenzbereich annähernd konstant 100 $\Omega$ beträgt, müssen die Bauelemente des zweiten Schaltungsabschnitts derart dimensioniert werden, daß bei Annahme der obigen Werte für R5 und R6 und den Skalierungsfaktor der Transkonduktanzverstärker T1, T2 gilt:

$$Id = Vtx_{Daten}/(50*(100+ZL))$$

Dabei bezeichnet $Vtx_{Daten}$ die Daten-Sendeleistung.

Für den im Datenfrequenzbereich näherungsweise konstanten Wert ZL $\approx$ 100 $\Omega$ gilt somit:

$$Id \approx Vtx_{Daten}/10 \text{ k}\Omega$$

Das den Datenausgang ITD zugeführte Signal Ic berechnet sich somit bei Berücksichtigung der Funktion des zuvor erwähnten zweiten Schaltungsabschnitts wie folgt:

$$Ic = (Ia + Ib)/100 - Id \approx (Ia + Ib)/100 - Vtx_{Daten}/10k\Omega$$

Das dem Datenausgang ITD zugeführte Signal Ic enthält somit neben eventuell vorhandenen Gleich- und Sprachströmen in erster Näherung nurmehr die durch die Empfangsleistung hervorgerufenen Datenströme, wobei insbesondere die von der Hochvolt-SLIC-Schaltung 1 erzeugten nichtlinearen Verzerrungen unterdrückt sind.

Eine weitere Verbesserung kann dadurch erzielt werden, daß an den datenbezogenen Stromausgang ITD ein Hochpaßfilter mit den in Fig. 1 gezeigten Bauelementen R6, C3 und R7 angeschlossen wird, welches zur Abtrennung bzw. Ausfilterung der oben beschriebenen Gleich- und Sprachströme, die in dem Ausgangssignal Ic noch enthalten sein können, dient. Über die Datenleitung 3 wird dann ausschließlich der durch die mit Vrx symbolisierte Empfangsleistung hervorgerufene Datenstrom übertragen.

Die vorliegende Erfindung realisiert somit erstmals eine direkt an die Telefonleitung 2 angeschlossene (Breitband-) SLIC-Schaltung, bei der eine effiziente Echodämpfung auch bei hohen Datenraten realisiert ist.

Bezugszeichenliste

| | |
|---|---|
| 1 | SLIC-Schaltung |
| 2 | Telefonleitung |
| 3 | datenbezogene Stromleitung |
| R1-R6 | Widerstand |
| C1-C3 | Kondensator |
| T1-T5 | Verstärker |
| ZL | Leitungsimpedanz |
| Vrx | Ersatzspannungsquelle für Empfangsleistung |
| Vtx | Ersatzspannungsquelle für Sendeleistung |
| VDC | Gleichspannungsanteil |
| Ia-Ie | Strom |

**Patentansprüche**

1.  Schaltung (1) zur gemeinsamen Übertragung von Sprache und Daten über eine Telefonleitung (2), mit einem ersten und einem zweiten Telefonleitungsanschluß (TIP, RING) zum Anschluß an die Telefonleitung (2), mit einem datenbezogenen Anschluß (ITD) zur Verbindung mit einer Datenleitung (3), mit ersten Schaltungsmitteln (T1-T4, R3, R4), welche mit den Telefonleitungsanschlüssen (TIP, RING) gekoppelt sind, zur Erzeugung eines ersten Stroms, der sich aus der Summe von über die Telefonleitung (2) fließenden und durch eine Sende-(Vtx) bzw. Empfangsleistung (Vrx) hervorgerufenen Sende- und Empfangsströmen (Ia, Ib) zusammensetzt, und mit zweiten Schaltungsmitteln (T5, R1-R2, C1-C2), welche mit den Telefonleitungsanschlüssen (TIP, RING) gekoppelt sind, zur Erzeugung eines zweiten Stroms (Id), welcher dem lediglich von der den Daten entsprechenden Sendeleistung hervorgerufenen Strom entspricht, wobei die Ausgänge der ersten Schaltungsmittel (T1-T4, R3, R4) und der zweiten Schaltungsmittel (T5, R1-R2, C1-C2) derart mit dem datenbezogenen Anschluß (ITD) gekoppelt sind, daß ein über den datenbezogenen Anschluß (ITD) ausgegebener Strom (Ic) der Differenz zwischen dem ersten Strom und dem zweiten Strom (Id) entspricht.

2.  Schaltung nach Anspruch 1, **dadurch gekennzeichnet,** **daß** die ersten Schaltungsmittel eine symmetrische Anordnung von ersten und zweiten Treibern (T2, T4) und ersten und zweiten Verstärkern (T1, T3) umfassen, wobei die ersten und zweiten Treiber (T2, T4) an ihrem einen Eingang jeweils die Sendeleistung (Vtx) empfangen und mit ihrem anderen Eingang über einen ersten bzw. zweiten Widerstand (R3, R4) mit ihrem Ausgang verbunden sind, und wobei die ersten und zweiten Verstärker (T1, T3) die an dem ersten bzw. zweiten Widerstand (R3, R4) abfallende Spannung verstärken.

3.  Schaltung nach Anspruch 2, **dadurch gekennzeichnet,** **daß** die ersten und zweiten Verstärker (T1, T3) jeweils Spannungs-/Stromverstärker sind.

4.  Schaltung nach Anspruch 3, **dadurch gekennzeichnet,** **daß** zwischen einem negativen Eingang und einem positiven Eingang des ersten Verstärkers (T1) der erste Widerstand (R3) geschaltet ist, wobei der negative Eingang des ersten Verstärkers (T1) mit dem ersten Telefonleitungsanschluß (TIP) verbunden ist, und **daß** zwischen einem positiven Eingang und einem negativen Eingang des zweiten Verstärkers (T3) der zweite Widerstand (R4) geschaltet ist, wobei der positive Eingang des zweiten Verstärkers (T3) mit dem zweiten Telefonleitungsanschluß (RING) verbunden ist.

5.  Schaltung nach einem der Ansprüche 2-4, **dadurch gekennzeichnet,** **daß** die ersten und zweiten Treiber (T2, T4) Differenzverstärker sind, wobei der positive Eingang jeweils die Sendeleistung (Vtx) empfängt, während der negative Eingang jeweils über den entsprechenden Widerstand (R3, R4) mit dem entsprechenden Ausgang des Treibers (T2, T4) verbunden ist.

6.  Schaltung nach einem der vorhergehenden Ansprüche,

**dadurch gekennzeichnet,**

**daß** die zweiten Schaltungsmittel einen Verstärker (T5) umfassen, dessen Eingänge jeweils über Hochpaßfilter (R1, C1; R2, C2) mit den Telefonleitungsanschlüssen (TIP, RING) verbunden sind.

**7.** Schaltung nach Anspruch 6 und einem der Ansprüche 2-5,

**dadurch gekennzeichnet,**

**daß** der Ausgang des Verstärkers (T5) der zweiten Schaltungsmittel mit den Ausgängen des ersten und zweiten Verstärkers (T1, T3) der ersten Schaltungsmittel und dem datenbezogenen Anschluß (ITD) verbunden ist.

**8.** Schaltung nach Anspruch 6 oder 7,

**dadurch gekennzeichnet**t,

daß der Verstärker (T5) der zweiten Schaltungsmittel ein Spannungs-/Stromverstärker ist, wobei ein negativer Eingang dieses Verstärkers (T5) über ein erstes Hochpaßfilter (R1, C1) mit dem ersten Telefonleitungsanschluß (TIP) und ein positiver Eingang dieses Verstärkers (T5) über ein zweites Hochpaßfilter (R2, C2) mit dem zweiten Telefonleitungsanschluß (RING) verbunden ist.

**9.** Schaltung nach Anspruch 8,

**dadurch gekennzeichnet,**

**daß** das erste und zweite Hochpaßfilter (R1, C1; R2, C2) derart ausgestaltet ist, daß dem Verstärker (T5) der zweiten Schaltungsmittel lediglich datenbezogene Stromanteile der über die Telefonleitung in Senderichtung fließenden Ströme (Ia, Ib) zugeführt werden.

**10.** Schaltung nach einem der vorhergehenden Ansprüche,

**dadurch gekennzeichnet,**

**daß** mit dem datenbezogenen Anschluß (ITD) ein Hochpaßfilter (R6, R7, C3) gekoppelt ist, über welches das über den datenbezogenen Anschluß (ITD) ausgegebene Stromsignal (Ic) geführt wird, wobei das Hochpaßfilter (R6, R7, C3) derart ausgestaltet ist, daß aus dem Stromsignal (Ic) Gleich- und/oder Sprachstromanteile ausgefiltert werden.

**Claims**

**1.** A circuit (1) for joint transmission of voice and data via a telephone line (2),
having a first and a second telephone line connection (TIP, RING) for connection to the telephone line (2),
having a data connection (ITD) for connection to a data line (3),
having first circuit means (T1-T4, R3, R4), which are coupled to the telephone line connections (TIP, RING) for producing a first current which is composed of the sum of transmission and received currents (Ia, Ib) which flow via the telephone line (2) and are produced via a transmission power level (Vtx) and a received power level (Vrx), respectively, and
having second circuit means (T5, R1-2, C1-C2) which are coupled to the telephone line connections (TIP, RING) for producing a second current (Id) which corresponds to the current produced solely by the transmission power level corresponding to the data,
with the outputs of the first circuit means (T1-T4, R3, R4) and of the second circuit means (T5, R1-R2, C1-C2) being coupled to the data connection (ITD) in such a manner that a current (Ic) which is emitted via the data connection (ITD) corresponds to the difference between the first current and the second current (Id).

**2.** The circuit as claimed in claim 1,
**characterized**
**in that** the first circuit means comprise a symmetrical arrangement of first and second drivers (T2, T4) and first and second amplifiers (T1, T3),
with the first and second drivers (T2, T4) each receiving the transmission power level (Vtx) at one of their inputs and being connected by their other input via a first and second resistor (R3, R4), respectively, to their output, and
with the first and second amplifiers (T1, T3) amplifying the voltage drop across the first and second resistors (R3, R4), respectively.

**3.** The circuit as claimed in claim 2,
**characterized**
**in that** the first and second amplifiers (T1, T3) are each voltage/current amplifiers.

**4.** The circuit as claimed in claim 3,
**characterized**
**in that** the first resistor (R3) is connected between a negative input and a positive input of the first amplifier (T1), with the negative input of the first amplifier (T1) being connected to the first telephone line connection (TIP), and
**in that** the second resistor (R4) is connected between a positive input and a negative input of the second amplifier (T3), with the positive input of the second amplifier (T3) being connected to the second telephone line connection (RING).

**5.** The circuit as claimed in one of Claims 2-4,
**characterized**
**in that** the first and second drivers (T2, T4) are differential amplifiers, with the positive input, each receiving the transmission power level (Vtx), while the negative input is in each case connected via the corresponding resistor (R3, R4) to the corresponding output of the driver (T2, T4).

6. The circuit as claimed in one of the preceding claims,
**characterized**
**in that** the second circuit means comprise an amplifier (T5) whose inputs are connected via respective high-pass filters (R1, C1; R2, C2) to the telephone line connections (TIP, RING).

7. The circuit as claimed in claim 6 and one of Claims 2-5,
**characterized**
**in that** the output of the amplifier (T5) in the second circuit means is connected to the outputs of the first and second amplifiers (T1, T3) in the first circuit means and to the data connection (ITD).

8. The circuit as claimed in claim 6 or 7,
**characterized**
**in that** the amplifier (T5) in the second circuit means is a voltage/current amplifier, a negative input of this amplifier (T5) being connected via a first high-pass filter (R1, C1) to the first telephone line connection (TIP), and a positive input of this amplifier (T5) being connected via a second high-pass filter (R2, C2) to the second telephone line connection (RING).

9. The circuit as claimed in claim 8,
**characterized**
**in that** the first and second high-pass filters (R1, C1; R2, C2) are designed such that the amplifier (T5) in the second circuit means are supplied only with data current components of the currents (Ia, Ib) flowing in the transmission direction via the telephone line.

10. The circuit as claimed in one of the proceeding claims,
**characterized**
**in that** the data connection (ITD) is coupled to a high-pass filter (R6, R7, C3) via which the current signal (Ic) which is emitted via the data connection (ITD) is passed, the high-pass filter (R6, R7, C3) being designed such that DC components and/or voice current components are filtered out of the current signal (Ic).

## Revendications

1. Circuit (1) pour la transmission simultanée de la voix et des données au moyen d'une ligne téléphonique (2),
avec une première et une deuxième connexion de ligne téléphonique (TIP, RING) pour la connexion à la ligne téléphonique (2),
avec une connexion (ITD) en liaison avec les données pour la liaison avec une ligne de données (3),
avec des premiers moyens de circuit (T1-T4, R3, R4) qui sont couplés avec les connexions (TIP, RING) de la ligne téléphonique pour générer un premier courant qui se compose de la somme d'un courant circulant par la ligne téléphonique (2) et de courants d'émission et de réception(Ia, Ib) déclenchés par une puissance d'émission (Vtx) et / ou une puissance de réception (Vrx) et
de seconds moyens de circuit (T5, R1-R2, C1-C2) qui sont couplés avec les connexions (TIP, RING) de la ligne téléphonique pour générer un second courant (Id), lequel correspond exclusivement au courant déclenché par la puissance d'émission correspondant aux données,
les sorties des premiers moyens du circuit (T1-T4, R3, R4) et des seconds moyens de circuit (T5, R1-R2, C1-C2) étant couplés avec la connexion (ITD) en liaison avec les données, si bien qu'un courant (Ic), distribué via une connexion (ITD) en liaison avec les données correspond à la différence entre le premier courant et le second courant (Id).

2. Circuit selon la revendication 1, **caractérisé en ce que** les premiers moyens de circuit comprennent un groupe de pilotes (T2, T4) et les premier et deuxième amplificateurs (T1, T3), les premier et deuxième pilotes (T2, T4) recevant chacun à leur entrée la puissance d'émission (Vtx) et étant reliés avec leur autre entrée au moyen d'une première et le cas échéant d'une deuxième résistance (R3, R4) et le premier et le second amplificateurs (T1, T3) renforçant la tension réduite sur la première et / ou la seconde résistance (R3, R4).

3. Circuit selon la revendication 2, **caractérisé en ce que** les premier et second amplificateurs (T1, T3) sont des amplificateurs de tension et de courant.

4. Circuit selon la revendication 3, **caractérisé en ce que** la première résistance (R3) est connectée entre une entrée négative et une entrée positive du premier amplificateur (T1), l'entrée négative du premier amplificateur (T1) étant reliée à la première connexion (TIP) de ligne téléphonique et
que la deuxième connexion (R4) est connectée entre une entrée positive et une entrée négative du deuxième amplificateur (T3), l'entrée positive du deuxième amplificateur (T3) étant reliée à la deuxième connexion (RING) de la ligne téléphonique.

5. Circuit selon une des revendications 2 à 4, **caractérisé en ce que** le premier et le second pilotes (T2, T4) sont des amplificateurs différentiels, l'entrée positive recevant la puissance d'émission (Vtx) pendant que l'entrée négative est reliée, au moyen de la résistance correspondante (R3, R4) avec la sortie correspondante du pilote (T2, T4).

6. Circuit selon Tune quelconque des revendications précédentes, **caractérisé en ce que** les seconds moyens du circuit comprennent un amplificateur (T5) dont les sorties sont à chaque fois reliées, au moyen de filtres passe-haut (R1, C1 ; R2, C2) avec les connexions (TIP, RING) de ligne téléphonique.

7. Circuit selon la revendication 6 et une des revendications 2 à 5, **caractérisé en ce que** la sortie de l'amplificateur (T5) des seconds moyens du circuit est reliée avec les sorties du premier et du second amplificateur (T1, T3) des premiers moyens du circuit et la connexion (ITD) en liaison avec les données.

8. Circuit selon la revendication 6 ou 7, **caractérisé en ce que** l'amplificateur (T5) des seconds moyens du circuit est un amplificateur de tension ou de courant, une entrée négative de cet amplificateur (T5) étant reliée au moyen d'un premier filtre passe-haut (R1, C1) avec la première connexion (TIP) de la ligne téléphonique et une entrée positive de cet amplificateur (T5) étant reliée au moyen d'un second filtre passe-haut (R2, C2) avec la seconde connexion (RING) de la ligne téléphonique.

9. Circuit selon la revendication 8, **caractérisé en ce que** le premier et le second filtres passe-haut (R1, C1 ; R2, C2) sont structurés de telle sorte que les seuls composants en liaison avec les données sont dirigés dans la direction d'émission des courants en circulation (Ia, Ib) vers l'amplificateur (T5) des deuxièmes moyens du circuit.

10. Circuit selon Tune quelconque des revendications précédentes, **caractérisé en ce qu'**un filtre passe-haut (R6, R7, C3) est couplé avec la connexion (ITD) en liaison avec les données et que le signal du courant fourni (Ic) passe par le dit filtre et par la connexion (ITD) en liaison avec les données, le filtre passe-haut (R6, R7, C3) étant structuré de telle sorte que les composants du courant vocal et / ou du courant continu provenant du signal de courant (Ic) sont filtrés.